# Europäisches Patentamt
# European Patent Office
# Office européen des brevets

(19)

(11) Veröffentlichungsnummer: **0 022 423**

**A2**

(12) ## EUROPÄISCHE PATENTANMELDUNG

(21) Anmeldenummer: 80730025.6

(22) Anmeldetag: 19.03.80

(51) Int. Cl.³: **C 02 F 1/52**
**B 01 D 21/24**

(30) Priorität: 06.07.79 DE 2927802

(43) Veröffentlichungstag der Anmeldung:
14.01.81 Patentblatt 81/2

(84) Benannte Vertragsstaaten:
BE CH FR GB IT LU NL SE

(71) Anmelder· Moll, Hans-Georg, Dr.
Görzallee 49a
D-1000 Berlin 45(DE)

(71) Anmelder. Grohmann, Andreas, Dr.
Drakestrasse 52a
D-1000 Berlin 45(DE)

(71) Anmelder: Hässelbarth, Ulrich, Dr.
Adolfstrasse 3
D-1000 Berlin 37(DE)

(71) Anmelder: Marks, Helmuth
Maulbeerallee 54
D-1000 Berlin 20(DE)

(72) Erfinder: Moll, Hans-Georg, Dr.
Görzallee 49a
D-1000 Berlin 45(DE)

(72) Erfinder: Grohmann, Andreas, Dr.
Drakestrasse 52a
D-1000 Berlin 45(DE)

(72) Erfinder: Hässelbarth, Ulrich, Dr.
Adolfstrasse 3
D-1000 Berlin 37(DE)

(72) Erfinder: Marks, Helmuth
Maulbeerallee 54
D-1000 Berlin 20(DE)

(74) Vertreter: Pfenning, Joachim
PATENTANWÄLTE PFENNING MAAS MEINIG SPOTT
Kurfürstendamm 170
D-1000 Berlin 15(DE)

(54) Vorrichtung zur Aufbereitung von Rohwasser, beispielsweise Oberflächenwasser, Abwasser oder dergleichen im Wege der Sedimentation.

(57) Die Erfindung bezieht sich auf eine Vorrichtung zur Wasseraufbereitung im Wege der Sedimentation, bei der das mit dem Flockungshilfsmittel versetzte Wasser tangential einem zylindrischen Behälter zugeführt wird. Durch eine mit Durchbrechungen versehene Zwischenwand wird die Strömungsgeschwindigkeit des Wassers so weit abgebremst, daß in dem Behälter keine aufwärts gerichteten Sekundärströmungen entstehen, so daß die gebildeten Flocken sich nach unten in dem Behälter absetzen, und das gereinigte Wasser durch ein mittig im Behälter angeordnetes Rohr nach unten abgeführt wird.

Die Wirkungsweise der Vorrichtung wird dadurch verbessert, daß koaxial zum Abflußrohr ein dieses unter Bildung eines Ringspaltes umgreifendes und übergreifendes Zusatzrohr angeordnet ist, das über siene Länge verteilte waagerechte Ringschlitze besitzt. Durch diese Ringschlitze wird erreicht, daß im Behälter das Wasser dem Zusatzrohr in waagerechter Richtung zufließt, und die Aufwärtsströmung des abfließenden Wassers erst in dem Ringspalt erfolgt. Hierdurch können sich auch kleinere Flokken nach unten absetzen, so daß diese nicht in das Reinwasser gelangen können.

Fig.2

EP 0 022 423 A2

1

Die Erfindung bezieht sich auf eine Vorrichtung zur Aufbereitung von Rohwasser, beispielsweise Oberflächenwasser, Abwasser oder dergleichen, in einem zylindrischen Behälter im Wege der Sedimentation mittels eines dem Wasser zugegebenen Flockungsmittels, bei dem das Wasser den Behälter durchströmt und nach einer ausreichenden Verweilzeit aus dem Behälter mit einer die Sinkgeschwindigkeit der Flocken unterschreitenden Steiggeschwindigkeit von der Wasseroberfläche abgeführt wird.

Nach einem, dem Stande der Technik nicht zurechenbaren Vorschlag der Anmelder, der optimale Bedingungen hinsichtlich der Strömungsverhältnisse bei einem geringstmöglichen Aufwand gewährleistet, wird das mit dem Flockungsmittel versetzte Wasser tangential in den zylindrischen Behälter an seinem unteren Umfangsbereich eingeleitet, die Umfangsgeschwindigkeit des einströmenden Wassers wird durch Abbremsung so weit verringert, daß das Auftreten von aufwärtsgerichteten Sekundärströmungen unterbunden wird, und das flockenfreie Klarwasser wird durch die Behältermitte nach unten abgeführt.

In einem zylindrischen Behälter, dem eine Flüssigkeit tangential zugeführt wird, treten sogenannte Sekundärströmungen auf, die zu einer vertikalen Aufwärtsströmung der Flüssigkeit in der Behältermitte führen; diese Sekundärströmungen werden als Teetassen-Effekt bezeichnet.

Das Auftreten dieser Sekundärströmung in der Behältermitte, deren Geschwindigkeit in Aufwärtsrichtung erheblich größer ist als die Sinkgeschwindigkeit der Flocken, macht die Sedimentation, das heißt das Absinken der gebildeten Flocken, unmöglich. Bei dem Vorschlage der Anmelder wird auf optimal einfache Weise die Eintrittsumfangsgeschwindigkeit des Rohwassers so weit abgebremst, daß die zu dem Teetassen-Effekt führenden, am Umfang des Behälters abwärts- und in der Behältermitte aufwärtsgerichteten Sekundärströmungen unterbunden werden mit der Folge, daß die gebildeten Flocken sich auf dem Behälterboden absetzen und das Klarwasser durch die Behältermitte nach unten abgeführt werden kann.

Zu diesem Zwecke weist der Behälter wenigstens einen tangential zu seiner zylindrischen Wand gerichteten Zuflußstutzen auf, in dem Behälter ist eine mit seiner zylindrischen Umfangswand einen Ringspalt bildende, den Behälter bis in die Nähe des Bodens durchgreifende, mit auf ihrem Umfang verteilten Durchbrechungen versehene Zwischenwand angeordnet, und in der Behältermitte ist eine axiale, den Behälterboden durchgreifende Rohrleitung vorgesehen, die an ihrem oberen offenen Ende das Klarwasser als Überlauf aufnimmt und nach unten durch den Behälter hindurch abführt.

3

Das durch die Zwischenwand abgebremste Rohwasser fließt nach Passieren der Zwischenwand in radialen Richtungen der mittigen Rohrleitung des Behälters zu, wo es in der Nähe der Rohrleitung durch das nachfließende Rohwasser nach oben geführt wird, so daß das Klarwasser über den oberen Rand der Rohrleitung abgeführt werden kann. Diese Vorrichtung nach dem Vorschlage der Anmelder arbeitet immer dann in vollem Umfange befriedigend, wenn die Geschwindigkeit des in den Behälter einströmenden Rohwassers, die von der Behältergröße und der Ausbildung der Zwischenwand abhängig ist, einen maximalen Wert nicht überschreitet. Wird dieser Wert jedoch aus irgendeinem Grunde überschritten, so erhöht sich zwangsläufig auch die Geschwindigkeit der Aufwärtsströmung des Wassers in der Nachbarschaft der Rohrleitung, so daß die Gefahr besteht, daß insbesondere kleine gebildete Flocken in die Rohrleitung eintreten können, so daß in solchen Fällen ein einwandfreies Klarwasser nicht erhältlich ist.

Der Erfindung liegt die Aufgabe zugrunde, die Vorrichtung nach dem Vorschlage der Anmelder so auszubilden, daß auch dann ein flockenfreies Klarwasser erhalten wird, wenn der maximale Wert der Zuströmgeschwindigkeit des Rohwassers überschritten wird.

4

Diese Aufgabe wird bei einer Vorrichtung nach dem Oberbegriff des Hauptanspruches dadurch gelöst, daß der koaxialen Rohrleitung ein auf dem Boden des Behälter sich abstützendes, den im Behälter befindlichen Teil der Rohrleitung koaxial unter Bildung eines Ringspaltes umgreifendes das freie Ende der Rohrleitung übergreifendes Rohr zugeordnet ist, das mit im Abstand über seine Länge verteilten, waagerechten Ringschlitzen versehen ist, die durch kurze, beispielsweise drei oder vier gleichmäßig über ihren Umfang verteilte schmale Stege überbrückt sind.

Die Unteransprüche stellen vorteilhafte Weiterbildungen der im Hauptanspruch unter Schutz gestellten Erfindung dar.

Durch die erfindungsgemäße Anordnung des den im Behälter befindlichen Teil der Rohrleitung übergreifenden, mit Ringschlitzen versehenen Rohres ist gewährleistet, daß das im Behälter befindliche Wasser praktisch bis zu dem Rohr in waagerechter Richtung strömt und durch die über die Länge des Rohres verteilten Ringschlitze dem Ringspalt zwischen dem Rohr und der Rohrleitung zugeführt wird, so daß die Aufwärtsströmung zum oberen Ende der Rohrleitung in dem Ringspalt erfolgt. Hierdurch ist gewährleistet, daß auch in dem Rohwasser gebildete kleinere Flocken sich auf ihrem Weg zu dem Rohr absetzen können, so daß auch bei

5

Überschreitung der zulässigen Strömungsgeschwindigkeit des Rohwassers verhindert wird, daß diese kleinen Flocken in das Reinwasser eingetragen werden.

Für die in dem Ringspalt aufwärtsgerichtete Strömung ist die Bernoulli'sche Gleichung maßgebend:

$$\frac{c^2}{2} + \frac{p}{\rho} = k.$$

wobei c die Strömungsgeschwindigkeit, p der Druck der Strömung, $\rho$ die Dichte des strömenden Mediums und k eine Konstante ist. Aus dieser Gleichung ergibt sich, daß bei steigender Geschwindigkeit der Druck entsprechend der Gleichung absinkt. Bei beispielsweise vier Ringschlitzen in dem die Rohrleitung übergreifenden Rohr werden vier Teilströme des im Behälter befindlichen Wassers in den Ringspalt zwischen dem Rohr und der Rohrleitung eingeleitet, die im Interesse einer gleichmäßigen Abführung aus dem Behälter einander gleich sein müssen.

In den unteren Ringschlitz muß bei vier Ringschlitzen ein Viertel des Wassers, in den darüberliegenden Ringschlitz ein zweites Viertel, in den darüberliegenden Ringschlitz ein drittes Viertel und in den letzten oberen Ringschlitz ein viertes Viertel des Wassers eintreten.

Zufolge der durch die Ringschlitze stufenweise sich erhöhenden in dem Rohr nach aufwärts strömenden Wasseranteile steigt die Strömungsgeschwindigkeit ebenfalls entsprechend stufenweise in dem Ringspalt. Es ergeben sich durch den stufenweisen Druckabfall nach der vorstehend angegebenen Gleichung in den über dem unteren Ringschlitz angeordneten Ringschlitzen Saugwirkungen, so daß bei Aufrechterhaltung der gleichen Breite aller Ringschlitze eine gleichmäßige Abführung des Reinwassers aus dem Behälter nicht mehr gewährleistet ist. Aus diesem Grunde nimmt die Breite der Ringschlitze von oben nach unten derart zu, daß ein gleicher Zufluß des Wassers zu allen Ringschlitzen gewährleistet ist. Um eine einwandfreie Strömung in dem Ringspalt zu erhalten, ist die Querschnittsfläche des Ringspaltes annähernd gleich der Querschnittsfläche der Rohrleitung, und schließlich ist die Summe aus der Höhe der durch die Ringschlitze gebildeten Teile des Rohres und aus der jeweils zugeordneten Schlitzbreite bei allen Rohrteilen gleich.

Die beiliegende Zeichnung zeigt eine beispielsweise Ausführungsform der Erfindung, und es bedeutet:

Abb. 1    schematische Darstellung der
         Vorrichtung nach dem Vorschlage
         der Anmelder;

7

Abb. 2   schematische Darstellung der
         erfindungsgemäßen Vorrichtung
         mit drei Ringschlitzen; und

Abb. 3   Darstellung des Rohres mit
         vier Ringschlitzen.


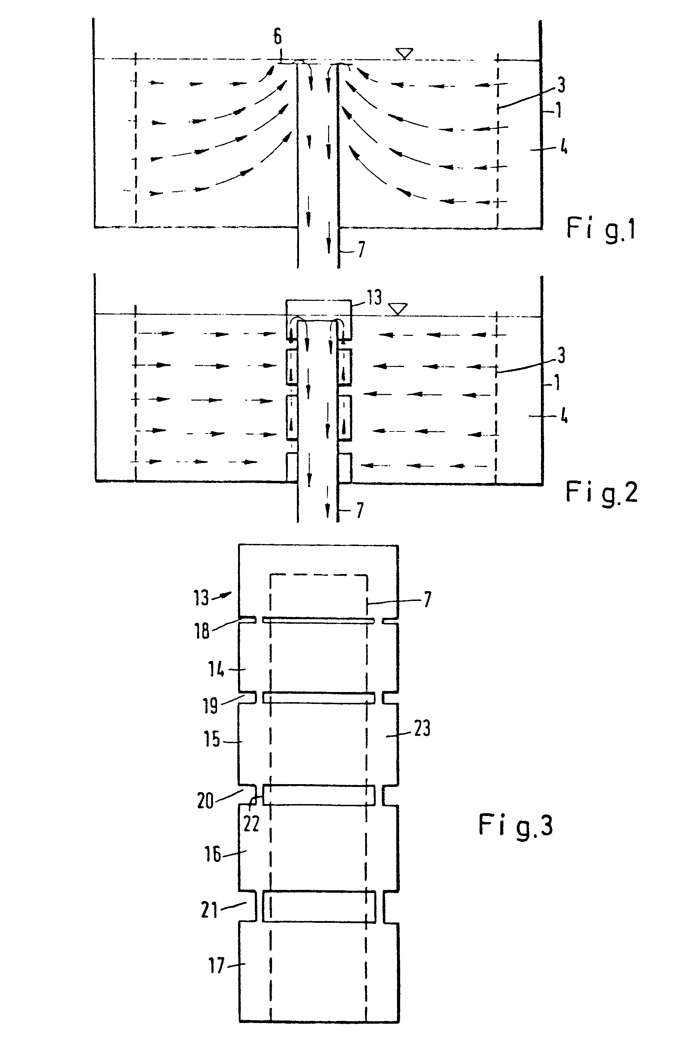

Die Abb. 1  zeigt entsprechend dem Vorschlage der
Anmelder den zylindrischen Behälter 1 mit seiner
Zwischenwand 3 und den zwischen der Zwischenwand 3
und dem Umfang des Behälters 1 bestehenden Ringspalt 4; in der Behältermitte ist die axiale
Rohrleitung 7 angeordnet, der das Wasser aus dem
Behälter entsprechend der gezeigten Pfeile
zuströmt.


Bei der erfindungsgemäßen Vorrichtung gemäß
Abb. 2 ist ein Rohr 13 angeordnet, das koaxial
den in dem Behälter 1 befindlichen Teil der
Rohrleitung 7 übergreift und mit dieser einen
Ringspalt 23 bildet. Das Wasser wird, wie die
Abb. 2 zeigt, aus dem Behälter in waagerechter
radialer Strömung bis praktisch unmittelbar
an die Wandung des Rohres 13 geführt, wo es
in die einzelnen Ringschlitze eintritt und in
dem Ringspalt 23 nach oben strömt und über den
oberen freien Rand der Rohrleitung 7 überläuft,
um nach unten abgeführt zu werden.

8

Die Abb. 3 zeigt das Rohr 13 in vergrößertem Maßstab, das mit den vier Ringschlitzen 18 bis 21 ausgestattet ist. Die Ringschlitze werden durch schmale, auf dem Umfang gleichmäßig verteilte Stege 22 überbrückt, so daß durch Ausstanzung der Ringschlitze 18 bis 21 das Rohr 13 in fünf Rohrabschnitte 14 bis 17 und 24 unterteilt ist. Das Rohr 13 bildet mit der Rohrleitung 7 einen Ringspalt 23. Das dem Rohr 13 in waagerechter Richtung aus dem Behälter zuströmende Wasser tritt gleichzeitig durch die vier Ringschlitze 18 bis 21 in den Ringspalt 23 ein, wobei durch die von unten nach oben sich verringernde Breite der Ringschlitze 18 bis 21 gewährleistet ist, daß durch jeden Ringschlitz 18 bis 21 ein gleicher Wasseranteil, nämlich je ein Viertel des Wassers, eintritt. Die Querschnittsfläche des Ringspaltes 23 ist annähernd gleich der Querschnittsfläche der Rohrleitung 7. Das Rohr 13 ruht mit seinem unteren Rohrteil 17 auf dem Boden des Behälters 1 auf, und die Höhe der einzelnen Ringteile zuzüglich des zugeordneten Ringschlitzes ist eine für jeden Ringteil gleichbleibende Größe. Die Höhe des Rohrteiles 17 zuzüglich der Breite des Ringschlitzes 21 ist gleich der Höhe des Rohrteiles 16 zuzüglich der Breite des Ringschlitzes 20. Das gleiche gilt auch für die darüberliegenden Rohrteile.

ANSPRÜCHE

1. Vorrichtung zur Aufbereitung von Rohwasser, beispielsweise Oberflächenwasser, Abwasser oder dergleichen in einem zylindrischen Behälter im Wege der Sedimentation mittels eines dem Wasser zugegebenen Flockungsmittels, bei dem das Wasser den Behälter durchströmt und nach einer ausreichenden Verweilzeit aus dem Behälter mit einer die Sinkgeschwindigkeit der Flocken unterschreitenden Steiggeschwindigkeit von der Wasseroberfläche abgeführt wird, bei dem das mit dem Flockungsmittel versetzte Wasser tangential in den Behälter am Umfangsbereich eingeleitet wird, die Umfangsgeschwindigkeit des einströmenden Wassers durch Abbremsung so weit verringert wird, daß das Auftreten von aufwärtsgerichteten Sekundärströmungen unterbunden wird, und das Klarwasser durch die Behältermitte mittels einer koaxial zum Behälter angeordneten, den Behälterboden durchgreifenden Rohrleitung nach unten abgeführt wird, d a d u r c h  g e k e n n - z e i c h n e t , daß der koaxialen Rohrleitung (7) ein auf dem Boden des Behälters (1) sich abstützendes, den im Behälter (1) befindlichen Teil der Rohrleitung (7) koaxial unter Bildung eines Ringspaltes (23) umgreifendes, das freie Ende der Rohrleitung (7) übergreifendes Rohr (13) zugeordnet ist, das mit im Abstand über seine Länge verteilten, waagerechten Ringschlitzen (18,21) versehen ist,

- 2 -

die durch kurze, beispielsweise drei oder vier gleichmäßig über ihren Umfang verteilte schmale Stege (22) überbrückt sind.

2. Vorrichtung nach Anspruch 1, dadurch gekennzeichnet, daß die Breite der Ringschlitze (18 bis 21) des Rohres (13) von oben nach unten derart zunimmt, daß jeder Ringschlitz (13 bis 28) in der Zeiteinheit von der gleichen Wassermenge durchflossen wird.

3. Vorrichtung nach Anspruch 1 und 2, dadurch gekennzeichnet, daß die Querschnittsfläche des Ringspaltes (23) zwischen der Rohrleitung (7) und dem diese umgebenden Rohr (13) annähernd gleich ist dem Querschnitt der Rohrleitung (7).

4. Vorrichtung nach Anspruch 1 bis 3, dadurch gekennzeichnet, daß die aus der Höhe jedes durch die Ringschlitze (18 bis 21) des Rohres (13) gebildeten Rohrteiles (14 bis 17) und aus der zugehörigen Schlitzbreite (18 bis 21) gebildete Summe gleich ist.

Fi g.1

Fi g.2

Fi g.3